# EUROPEAN PATENT APPLICATION

(11) **EP 4 557 436 A1**
(43) Date of publication of application: **21.05.2025**
(21) Application number: 23912614.7
(22) Date of filing: 29.11.2023
(51) Int. Cl.: H01M 10/0569, H01M 10/0525, H01M 4/38, H01M 4/58, H01M 4/60

(54) **ELECTROLYTE FOR LITHIUM-SULFUR BATTERY AND LITHIUM-SULFUR BATTERY INCLUDING SAME**

(30) Priority: 27.12.2022 KR 20220186449
(71) Applicant: LG Energy Solution, Ltd., Seoul 07335 (KR)
(72) Inventor: KWACK, Ho-Beom, Daejeon 34122 (KR); LEE, Chang-Hoon, Daejeon 34122 (KR); HAN, Sueng-Hoon, Daejeon 34122 (KR)
(74) Representative: Goddar, Heinz J.
(86) International application number: PCT/KR2023/019486
(87) International publication number: WO 2024/143939

(57) **Abstract**

The present disclosure relates to an electrolyte for a lithium-sulfur battery and a lithium-sulfur battery comprising the same, and the electrolyte for the lithium-sulfur battery includes a nonaqueous solvent, a lithium salt, nitrate and trioxane, wherein the nonaqueous solvent includes an ether-based solvent, and the ether-based solvent includes a cyclic ether and an acyclic ether.

## Description

### TECHNICAL FIELD

The present disclosure relates to an electrolyte for a lithium-sulfur battery and a lithium-sulfur battery comprising the same.

The present application claims priority to Korean Patent Application No. 10-2022-0186449 filed on December 27, 2022 in the Republic of Korea, the disclosure of which is incorporated herein by reference.

### BACKGROUND ART

A lithium-sulfur battery is a battery system using a sulfur-based material having a sulfur-sulfur (S-S) bond as a positive electrode active material and a lithium metal as a negative electrode active material. Sulfur, a main component of the positive electrode active material, is abundant in nature and can be found around the world, is non-toxic, and has low atomic weight.

As secondary batteries are used in a wide range of applications including electric vehicles (EVs) and energy storage systems (ESSs), attention is drawn to lithium-sulfur battery technology that achieves theoretically higher energy storage density by weight (~2,600 Wh/kg) than lithium-ion secondary batteries having lower energy storage density by weight (~250 Wh/kg).

During discharging, lithium-sulfur batteries undergo oxidation at the negative electrode active material, lithium, by releasing electrons into lithium cation, and reduction at the positive electrode active material, the sulfur-based material, by accepting electrons. Through the reduction reaction, the sulfur-based material is converted to sulfur anion by the S-S bond accepting two electrons. The lithium cation produced by the oxidation reaction of lithium migrates to the positive electrode via an electrolyte, and bonds with the sulfur anion produced by the reduction reaction of the sulfur-based compound to form a salt. Specifically, sulfur before the discharge has a cyclic S₈ structure, and it is converted to lithium polysulfide (LiSx) by the reduction reaction and is completely reduced to lithium sulfide (Li₂S).

In this instance, it is difficult to ensure reactivity with electrons and lithium ions in solid state due to low electrical conductivity of sulfur in the sulfur-based compound as the positive electrode active material. Accordingly, to improve reactivity of sulfur in lithium-sulfur batteries, technology has been developed to produce intermediate polysulfide Li₂Sₓ, to induce liquid phase reaction and improve reactivity. This technology uses, as solvents of electrolytes, ether-based solvents in which lithium polysulfide highly dissolves, for example, dioxolane, dimethoxy ethane (DME), etc. Thus, the amount of electrolytes affects reactivity of sulfur and battery life.

More recently, research and development efforts are devoted to lithium-sulfur secondary batteries capable of low temperature operation for use in aircraft and nextgeneration electric vehicles. However, due to the elution of polysulfide (PS) from the positive electrode and consequential increase in material resistance of electrolytes, low temperature operation of lithium-sulfur secondary batteries is still challenging.

To sum, Li-S batteries work through solid->liquid reaction in which the active material elutes from the positive electrode in the form of PS during the first discharge (~2.3V), and liquid->solid reaction in which the eluted PS moves back to the positive electrode during the second discharge (~2.1V). In this instance, the efficiency of the reaction in which the eluted PS moves back to the positive electrode is a factor that determines degradation of lithium-sulfur secondary batteries.

Accordingly, to improve the life of lithium-sulfur batteries, there is a need for technology for improving the conversion efficiency of polysulfide (PS) or controlling the amount of PS eluted from the positive electrode into the electrolyte.

### SUMMARY

### Technical Problem

The present disclosure is directed to providing an electrolyte for a lithium-sulfur battery with improved life characteristics by controlling the elution of polysulfide (PS) from a positive electrode and a lithium-sulfur battery using the same.

In particular, the present disclosure is directed to providing a lithium-sulfur battery that lasts long by suppressing the elution of polysulfide from the positive electrode to prevent degradation in properties of an electrolyte and degradation of a negative electrode.

### Technical Solution

To solve the above-described problem, according to an aspect of the present disclosure, there is provided an electrolyte for a lithium-sulfur battery of the following embodiments.

The electrolyte for the lithium-sulfur battery according to a first embodiment includes a nonaqueous solvent, a lithium salt, nitrate and trioxane, wherein the nonaqueous solvent includes an ether-based solvent, and wherein the ether-based solvent includes a cyclic ether and an acyclic ether.

According to a second embodiment, in the first embodiment, the cyclic ether may be included in an amount of 30 vol% or less based on a total volume of the nonaqueous solvent.

According to a third embodiment, in the first or second embodiment, the cyclic ether may be included in an amount of 20 vol% or less based on a total volume of the nonaqueous solvent.

According to a fourth embodiment, in any one of the first to third embodiments, the cyclic ether may be included in an amount of 20 vol% or less based on a total volume of the nonaqueous solvent, and the acyclic ether may be included in an amount of 80 vol% or more based on the total volume of the nonaqueous solvent.

According to a fifth embodiment, in any one of the first to fourth embodiments, the nonaqueous solvent may not include a carbonate-based solvent.

According to a sixth embodiment, in any one of the first to fifth embodiments, the cyclic ether may include 2-methylfuran, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, isosorbide dimethyl ether or a mixture thereof.

According to a seventh embodiment, in any one of the first to sixth embodiments, the acyclic ether may include dimethyl ether, diethyl ether, dipropyl ether, dibutyl ether, diisobutyl ether, ethylmethyl ether, ethylpropyl ether, ethyltertbutyl ether, dimethoxymethane, trimethoxymethane, dimethoxyethane, diethoxyethane, dimethoxypropane, diethyleneglycol dimethylether, diethyleneglycol diethylether, triethyleneglycol dimethylether, tetraethyleneglycol dimethylether, ethyleneglycol divinylether, diethyleneglycol divinylether, triethyleneglycol divinylether, dipropylene glycol dimethyl ether, butylene glycol ether, diethyleneglycol ethylmethylether, diethyleneglycol isopropylmethylether, diethyleneglycol butylmethylether, diethyleneglycol tertbutylethylether, ethyleneglycol ethylmethylether or a mixture thereof.

According to an eighth embodiment, in any one of the first to seventh embodiments, the trioxane may be included in an amount of 5 wt% to 45 wt% based on a total weight of the electrolyte for the lithium-sulfur battery.

According to a ninth embodiment, in any one of the first to eighth embodiments, the trioxane may be included in an amount of 10 wt% to 20 wt% based on a total weight of the electrolyte for the lithium-sulfur battery.

According to a tenth embodiment, in any one of the first to ninth embodiments, a weight ratio of the trioxane to the nitrate may be 2 to 15.

According to another aspect of the present disclosure, there is provided a lithium-sulfur battery of the following embodiments.

The lithium-sulfur battery according to an eleventh embodiment includes a positive electrode, a negative electrode, a separator between the positive electrode and the negative electrode and an electrolyte, wherein the electrolyte is defined in any one of the first to tenth embodiments, and wherein the positive electrode includes a sulfur-containing compound as a positive electrode active material.

According to a twelfth embodiment, in the eleventh embodiment, the sulfur-containing compound may include an inorganic sulfur (S₈), Li₂Sn (n≥1), a disulfide compound, an organic sulfur compound, a carbon-sulfur polymer ((C₂Sₓ)ₙ, x is an integer of 2.5 to 50, n≥2) or a mixture thereof.

According to a thirteenth embodiment, in the eleventh or twelfth embodiment, the negative electrode may include a lithium metal, a lithium alloy or a mixture thereof as a negative electrode active material.

According to a fourteenth embodiment, in any one of the eleventh to thirteenth embodiments, the lithium-sulfur battery may be a coin-type battery or a pouch-type battery.

### Advantageous Effects

The electrolyte for the lithium-sulfur battery according to an embodiment of the present disclosure may suppress the elution of polysulfide (PS) from the positive electrode.

Accordingly, the electrolyte for the lithium-sulfur battery according to an embodiment of the present disclosure may prevent degradation of the positive electrode, the electrolyte and the negative electrode during repeated charge and discharge cycles of the lithium-sulfur battery, thereby improving life characteristics of the battery.

The electrolyte for the lithium-sulfur battery according to an embodiment of the present disclosure may have a beneficial effect on the lithium-sulfur battery with high energy density.

### BRIEF DESCRIPTION OF THE DRAWINGS

The accompanying drawings illustrate exemplary embodiments of the present disclosure and together with the foregoing description, serve to provide a further understanding of the technical aspect of the present disclosure, and thus the present disclosure should not be construed as being limited to the accompanying drawings.
FIG. 1 is a graph showing evaluation results of Experimental Example 1 in the present disclosure.
FIG. 2 is a graph showing evaluation results of Experimental Example 1 in the present disclosure.
FIG. 3 is a graph showing evaluation results of Experimental Example 2 in the present disclosure.
FIG. 4 is a graph showing evaluation results of Experimental Example 2 in the present disclosure.
FIG. 5 is a graph showing evaluation results of Experimental Example 3 in the present disclosure.
FIG. 6 is a graph showing evaluation results of Experimental Example 3 in the present disclosure.
FIG. 7 is a graph showing evaluation results of Experimental Example 4 in the present disclosure.
FIG. 8 is a graph showing evaluation results of Experimental Example 4 in the present disclosure.
FIG. 9 is a graph showing evaluation results of Experimental Example 4 in the present disclosure.

### DETAILED DESCRIPTION

Hereinafter, the present disclosure will be described in detail. However, the present disclosure is not limited to the following description and each element may be variously modified or selectively used together, if necessary. Accordingly, it should be understood that the present disclosure encompasses all modifications, equivalents or substitutes included in the aspect and technical scope of the present disclosure.

The term "comprise" when used in this specification, specifies the presence of stated elements, but does not preclude the presence or addition of one or more other elements, unless the context clearly indicates otherwise.

The term "polysulfide (PS)" as used herein is the concept that covers "polysulfide ion (Sₓ²⁻, 1 < x ≤ 8))" and "lithium (poly)sulfide (Li₂Sₓ or LiSₓ⁻, 1 < x ≤8 )".

During operation of a lithium-sulfur battery, polysulfide (PS, LiSx) produced by the reduction of sulfur (S₈) elutes from the positive electrode into the electrolyte, and in this instance, when the electrolyte has a high ratio of solvent to polysulfide, overvoltage occurs due to the high concentration of polysulfide in the solvent. As described above, the lithium-sulfur battery suffer from rapid capacity fading over repeated charge and discharge cycles due to the shuttle effect of lithium polysulfide eluted from the positive electrode into the electrolyte during charging and discharging.

Accordingly, an electrolyte for a lithium-sulfur battery according to an aspect of the present disclosure uses a combination of solvents having a nonsolvent feature for polysulfide and an additive to suppress the elution of polysulfide into the electrolyte and solve the above-described problem.

### Electrolyte for lithium secondary battery

An electrolyte for a lithium-sulfur battery according to an aspect of the present disclosure includes a nonaqueous solvent, a lithium salt, nitrate and trioxane,
wherein the nonaqueous solvent includes an ether-based solvent, and
wherein the ether-based solvent includes a cyclic ether and an acyclic ether.

**In** the present disclosure, the trioxane refers collectively to organic compounds composed of a six-membered ring with 3 carbon atoms and 3 oxygen atoms, having the molecular formula C₃H₆O₃. The trioxane may have three isomers, and the trioxane may specifically include 1,2,3-trioxane, 1,2,4-trioxane, 1,3,5-trioxane or a mixture thereof.

In an embodiment of the present disclosure, the trioxane may include 1,3,5-trioxane.

According to an embodiment of the present disclosure, when the trioxane is added to the electrolyte for the lithium-sulfur battery, it may be possible to reduce the solubility of the polysulfide in the nonaqueous solvent, in particular, the ether-based solvent, thereby suppressing the elution of polysulfide from the positive electrode, but the mechanism of the present disclosure is not limited thereto.

According to an aspect of the present disclosure, the nonaqueous solvent is a medium for the movement of ions involved in the electrochemical reaction of the lithium secondary battery, and is used to dissolve the lithium salt, the nitrate and/or the trioxane.

According to an aspect of the present disclosure, the electrolyte for the lithium-sulfur battery includes the ether-based solvent as the nonaqueous solvent, and in particular, the ether-based solvent includes two types of ether-based solvents such as cyclic ether and acyclic ether.

In an embodiment of the present disclosure, the nonaqueous solvent may include the ether-based solvent in an amount of 80 vol% or more, for example, 85 vol% to 100 vol%, 90 vol% to 100 vol%, 95 vol% to 100 vol%, 98 vol% to 100 vol%, 90 vol% to 98 vol%, or 90 vol% to 95 vol% based on the total volume of the nonaqueous solvent. When the amount of the ether-based solvent is within the above-described range based on the total volume of the nonaqueous solvent, it may have a beneficial effect on solubility of the lithium salt, the nitrate and the trioxane, but the present disclosure is not limited thereto.

In an embodiment of the present disclosure, the cyclic ether may, for example, act as a non-solvent for polysulfide eluted from the positive electrode, to suppress the elution of polysulfide. In an embodiment of the present disclosure, the cyclic ether may be, for example, included in an amount of 30 vol% or less, 25 vol% or less, 20 vol% or less, 15 vol% or less, and specifically 1 vol% to 20 vol% or 5 vol% to 20 vol% based on the total volume of the nonaqueous solvent. When the amount of the cyclic ether is within the above-described range, it may have a beneficial effect on polysulfide elution suppression and solubility of the lithium salt, the nitrate and the trioxane, but the present disclosure is not limited thereto.

In another embodiment of the present disclosure, the nonaqueous solvent may include the cyclic ether in an amount of 20 vol% or less and the acyclic ether in an amount of 80 vol% or more, for example 85 vol% or more, 80 vol% to 99 vol%, or 80 vol% to 90 vol% based on the total volume.

In an embodiment of the present disclosure, the cyclic ether may include, for example, 2-methylfuran, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, isosorbide dimethyl ether or a mixture thereof. Preferably, the cyclic ether may include at least one selected from the group consisting of 2-methylfuran, 1,3-dioxolane, tetrahydrofuran, 2-methyltetrahydrofuran and 2,5-dimethyltetrahydrofuran. More preferably, the cyclic ether may include 2-methylfuran.

In an embodiment of the present disclosure, the cyclic ether may preferably include a conjugated heterocyclic compound. For example, the conjugated heterocyclic compound includes a heterocyclic compound including at least two double bonds and any one of an oxygen atom or a sulfur atom, and forms a polymer passivation layer (a solid electrolyte interphase (SEI) layer) on the surface of lithium-based metal (a negative electrode) by ring opening reaction of the heterocyclic compound at the initial discharge stage of the battery, thereby suppressing lithium dendrite growth, and further, reducing electrolyte decomposition on the lithium-based metal surface and its consequential side reaction, leading to longer life of the lithium-sulfur battery. Additionally, the conjugated heterocyclic compound cannot easily dissolve the salt due to delocalization of lone pair electrons of the heteroatom (the oxygen atom or the sulfur atom), thereby reducing the amount of polysulfide eluted into the electrolyte. The conjugated heterocyclic compound may be a substituted or unsubstituted heterocyclic compound with at least one selected from the group consisting of an alkyl group having 1 to 4 carbon atoms, a cyclic alkyl group having 3 to 8 carbon atoms, an aryl group having 6 to 10 carbon atoms, a halogen group, a nitro group (-NO₂), an amine group (-NH₂) or a sulfonyl group (-SO₂). Additionally, the conjugated heterocyclic compound may be a polycyclic compound of the heterocyclic compound and at least one of a cyclic alkyl group having 3 to 8 carbon atoms or an aryl group having 6 to 10 carbon atoms.

In an embodiment of the present disclosure, the conjugated heterocyclic compound may include, for example, at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran and 2-(2-nitrovinyl)furan, but is not limited thereto, and 2-methylfuran may be the most preferred.

Accordingly, in an embodiment of the present disclosure, the cyclic ether may consist of 2-methylfuran (2-MeF), but the present disclosure is not limited thereto.

In an embodiment of the present disclosure, the acyclic ether may include, for example, dimethyl ether, diethyl ether, dipropyl ether, dibutyl ether, diisobutyl ether, ethylmethyl ether, ethylpropyl ether, ethyltertbutyl ether, dimethoxymethane, trimethoxymethane, dimethoxyethane, diethoxyethane, dimethoxypropane, diethyleneglycol dimethylether, diethyleneglycol diethylether, triethyleneglycol dimethylether, tetraethyleneglycol dimethylether, ethyleneglycol divinylether, diethyleneglycol divinylether, triethyleneglycol divinylether, dipropylene glycol dimethyl ether, butylene glycol ether, diethyleneglycol ethylmethylether, diethyleneglycol isopropylmethylether, diethyleneglycol butylmethylether, diethyleneglycol tertbutylethylether, ethyleneglycol ethylmethylether or a mixture thereof. Preferably, the acyclic ether may include at least one selected from the group consisting of dimethoxyethane, diethoxyethane, diethyleneglycol dimethylether, triethyleneglycol dimethylether and tetraethyleneglycol dimethylether. More preferably, the acyclic ether may include dimethoxyethane.

In an embodiment of the present disclosure, the acyclic ether may consist of dimethoxyethane (DME).

In an embodiment of the present disclosure, the nonaqueous solvent may include 2-methylfuran and dimethoxyethane.

Additionally, the nonaqueous solvent may include the cyclic ether and the acyclic ether at a volume ratio of 5:95 to 95:5, preferably 5:95 to 50:50, 10:90 to 30:70, and the most preferably 15:85 to 25:75 or 20:80. The volume ratio is a ratio of "vol% of the cyclic ether":"vol% of the acyclic ether" in the nonaqueous solvent.

In an embodiment of the present disclosure, in addition to the ether-based solvent, the nonaqueous solvent may further include any organic solvent that dissolves the lithium salt, the nitrate and the trioxane, for example, any organic solvent used in electrolytes of lithium secondary batteries such as ester, amide, linear carbonate and cyclic carbonate, and in an embodiment of the present disclosure, in addition to the ether-based solvent, the nonaqueous solvent may further include any nonaqueous solvent used in electrolytes of lithium secondary batteries. However, preferably, in terms of solubility of the lithium salt, the nitrate and the trioxane, the electrolyte for the lithium-sulfur battery may not include the carbonate-based solvent as the nonaqueous solvent.

In an embodiment of the present disclosure, the ester may include, for example, any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone or a mixture thereof, but is not limited thereto.

In an embodiment of the present disclosure, the carbonate not included in the electrolyte for the lithium-sulfur battery may include linear carbonate, cyclic carbonate or a mixture thereof.

The linear carbonate may typically include, for example, any one selected from the group consisting of dimethyl carbonate, diethyl carbonate, dipropyl carbonate, ethylmethyl carbonate, methylpropyl carbonate and ethylpropyl carbonate or a mixture thereof, but is not limited thereto.

The cyclic carbonate may typically include, for example, any one selected from the group consisting of ethylene carbonate, propylene carbonate, 1,2-butylene carbonate, 2,3-butylene carbonate, 1,2-pentylene carbonate, 2,3-pentylene carbonate, vinylene carbonate, vinylethylene carbonate and halides thereof or a mixture thereof, but is not limited thereto. Additionally, the halides may include, for example, fluoroethylene carbonate, but is not limited thereto.

In another embodiment of the present disclosure, because the carbonate-based solvent does not dissolve the nitrate and/or the trioxane or has a low solubility, the nonaqueous solvent may not include the carbonate-based solvent.

In another embodiment of the present disclosure, the nonaqueous solvent may include the carbonate-based solvent in such a small amount that the carbonate-based solvent does not affect the solubility of the nitrate and/or the trioxane, and for example, when the nonaqueous solvent includes the carbonate-based solvent, the amount of the carbonate-based solvent may be 3 wt% or less, 2 wt% or less, 1 wt% or less, 0.5 wt% or less or 0 wt% (i.e., zero) based on the total weight of the electrolyte for the lithium secondary battery.

In an embodiment of the present disclosure, the electrolyte for the lithium-sulfur battery may, for example, include the trioxane in an amount of 5 wt% to 45 wt%, specifically 10 wt% to 40 wt%, 10 wt% to 30 wt%, 10 wt% to 25 wt% or 10 wt% to 20 wt% based on the total weight of the electrolyte for the lithium-sulfur battery. When the amount of the trioxane is within the above-described range, the addition of the trioxane may have a beneficial effect on polysulfide elution suppression and life characteristics improvement of the lithium-sulfur battery using the same, but the present disclosure is not limited thereto.

In an embodiment of the present disclosure, the lithium salt is included as an electrolyte salt in the electrolyte for the lithium-sulfur battery, and may include any lithium salt commonly used in electrolytes of lithium-sulfur batteries without limitation. The lithium salt may include, for example, LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborate, lithium lower aliphatic carbonate, lithium tetraphenylborate, lithium imide or a mixture thereof, but is not limited thereto.

In an embodiment of the present disclosure, the lithium salt may not include lithium nitrates. The lithium nitrates may be included as an example of the above-described nitrate.

In an embodiment of the present disclosure, the lithium salt may include lithium bis(fluorosulfonyl)imide (LiFSI).

In an embodiment of the present disclosure, the lithium salt may consist of lithium bis(fluorosulfonyl)imide (LiFSI).

In an embodiment of the present disclosure, the concentration of the lithium salt may be appropriately determined in view of ionic conductivity and solubility, and may be, for example, 0.1 to 4.0 M, 0.5 to 2.0 M, 0.5 to 1.0M, or 0.5 M. When the concentration of the lithium salt is within the above-described range, it may have a beneficial effect on ionic conductivity and electrolyte viscosity, but is not limited thereto.

In an embodiment of the present disclosure, in addition to the lithium salt, the nitrate may be used to provide ions when it dissolves in the electrolyte of the lithium secondary battery, thereby improving the electrical conductivity of the lithium secondary battery and improving life characteristics of the battery when the electrolyte for the lithium secondary battery is used in the lithium-sulfur battery. Specifically, the efficacy of the nitrate is not limited thereto, but for example, the nitrate may suppress reduction reaction of lithium polysulfide during charging and discharging of the lithium-sulfur battery and prevent irreversible consumption of lithium polysulfide, thereby improving the performance of the lithium-sulfur battery.

In an embodiment of the present disclosure, the nitrate may include, without limitation, any type of nitrate that forms a stable coating on the negative electrode, i.e., the lithium metal electrode of the lithium secondary battery, specifically the lithium-sulfur battery and improves charge and discharge efficiency, and may include, for example, nitric acid-based compounds, nitrous acid-based compounds or a mixture thereof.

In an embodiment of the present disclosure, the nitrate may be, for example, selected from the group consisting of inorganic nitric acid-based or nitrous acid-based compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂), ammonium nitrite (NH₄NO₂); organic nitric acid-based or nitrous acid-based compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; organic nitro compounds such as nitromethane, nitropropane, nitrobutane, nitrobenzene, dinitrobenzene, nitropyridine, dinitropyridine, nitrotoluene, dinitrotoluene and a combination thereof, but is not limited thereto.

In an embodiment of the present disclosure, the cation of the nitrate may be selected from alkali metals, for example, lithium, sodium, potassium, rubidium and cesium, but is not limited thereto.

In another embodiment of the present disclosure, the nitrate may include lithium nitrate (LiNO₃).

In an embodiment of the present disclosure, the nitrate may be, for example, included in an amount of 1 wt% to 10 wt%, 2 wt% to 10 wt% or 3 wt% to 10 wt%, specifically 3 wt% to 8 wt%, 3 wt% to 6 wt% or 3 wt% to 5 wt% based on the total weight of the electrolyte for the lithium secondary battery, but is not limited thereto. When the nitrate is included in the above-described amount, the use of the nitrate may have a beneficial effect on electrical conductivity of the electrolyte and polysulfide elution suppression when used in the lithium-sulfur battery, but the present disclosure is not limited thereto.

In an embodiment of the present disclosure, the nitrate may be, for example, included at a weight ratio of the trioxane to the nitrate of 2 to 15, specifically 3 to 10, 3 to 8 or 3.3 to 7, but the present disclosure is not limited thereto.

In another embodiment of the present disclosure, in addition to the above-described composition, the electrolyte for the lithium-sulfur battery may further include an additive to improve charge and discharge characteristics and flame retardancy. The present disclosure is not limited to a particular type of additive, but the additive may include, for example, pyridine, triethylphosphite, triethanolamine, ethylene diamine, n-glyme, hexa phosphoric acid triamide, nitrobenzene derivatives, sulfur, quinone imine dyes, N-substituted oxazolidinone, N,N-substituted imidazolidine, ammonium salts, pyrrole, 2-methoxy ethanol, aluminum trichloride, fluoroethylene carbonate (FEC), propene sultone (PRS) and vinylene carbonate (VC).

The electrolyte for the lithium-sulfur battery according to an aspect of the present disclosure may be prepared by methods commonly used in the art, and the present disclosure is not limited to a particular method.

### Lithium-sulfur battery

A lithium-sulfur battery according to another aspect of the present disclosure includes the above-described electrolyte for the lithium-sulfur battery, and a positive electrode including a positive electrode active material and a negative electrode including a negative electrode active material. Specifically, the lithium-sulfur battery includes the positive electrode, the negative electrode, a separator between the positive electrode and the negative electrode and an electrolyte.

### [Positive electrode]

The positive electrode may include a positive electrode current collector and a positive electrode active material layer on one or two surfaces of the positive electrode current collector.

The positive electrode current collector is not limited to a particular type and may include any positive electrode current collector that supports the positive electrode active material and has high conductivity without causing any chemical change in the battery. For example, the positive electrode current collector may include copper, stainless steel, aluminum, nickel, titanium, palladium, sintered carbon, copper or stainless steel treated with carbon, nickel or silver on the surface, aluminum-cadmium alloys, etc.

The positive electrode current collector may have microtexture on the surface to increase the bonding strength with the positive electrode active material, and may come in different forms, for example, a film, a sheet, a foil, a mesh, a net, a porous body, a foam, a nonwoven, etc.

The positive electrode active material layer includes the positive electrode active material, and may further include a conductive material, a binder and an additive.

The positive electrode active material may include a sulfur-carbon composite including a porous carbon material and sulfur in at least part of the inside of the porous carbon material and the outer surface of the porous carbon material. Because sulfur included in the positive electrode active material does not have electrical conductivity itself, sulfur is used in combination with conductive materials such as carbon materials. Accordingly, the sulfur is included in the form of the sulfur-carbon composite.

In an embodiment of the present disclosure, the positive electrode active material may include elemental sulfur, a sulfur compound or a mixture thereof. Specifically, the positive electrode active material may include inorganic sulfur (S₈), Li₂Sn (n≥1), disulfide compounds, organic sulfur compounds, carbon-sulfur polymers ((C₂Sₓ)ₙ, x=2.5 to 50, n≥2) or a mixture thereof. Preferably, the sulfur may be inorganic sulfur.

The sulfur-carbon composite includes the porous carbon material to provide skeletons for uniformly and stably immobilizing the sulfur and compensate for low electrical conductivity of the sulfur, thereby enhancing electrochemical reaction.

The porous carbon material may be generally produced by carbonization of various carbon precursors. The porous carbon material includes irregular pores therein. The average diameter of the pores may be in a range between 1 and 200 nm, and the porosity may be in a range between 10 and 90 vol% of the total volume of the porous carbon material. When the average diameter of the pores is less than the above-described range, the pore size is only at a molecular level, making sulfur loading impossible, and on the contrary, when the average diameter of the pores exceeds the above-described range, it is not suitable for the electrode manufacturing process due to low mechanical strength of the porous carbon material.

In an embodiment of the present disclosure, 'the average diameter of the pores' may be measured by known methods for measuring the pore diameter of a porous material, and the measurement method is not particularly limited. For example, the pore diameter may be measured by electron scanning microscopy (SEM), field emission electron microscopy or laser diffraction. The measurement using laser diffraction may be, for example, conducted using a commercially available laser diffraction particle size analyzer (for example, Microtrac MT 3000).

In an embodiment of the present disclosure, the 'porosity' refers to a ratio of the volume occupied by pores to the total volume of a structure in vol% unit, and may be used interchangeably with the terms pore ratio, void ratio, etc. In the present disclosure, the method for measuring the porosity is not particularly limited. According to an embodiment of the present disclosure, the porosity may be measured by the BET method using nitrogen gas, mercury (Hg) porosimetry or ASTM D2873.

The porous carbon material may be a spherical, rod-like, spiky, platy, tubular or bulky shape and is not limited to a particular shape, and may be in any shape commonly used in lithium-sulfur batteries.

The porous carbon material may include any porous carbon material having a porous structure and large specific surface area commonly used in the art. For example, the porous carbon material may include at least one selected from the group consisting of graphite; graphene; carbon black such as Denka black, acetylene black, Ketjen black, channel black, furnace black, lamp black, thermal black, etc.; carbon nanotubes (CNT) such as single-walled carbon nanotubes (SWCNT), multi-walled carbon nanotubes (MWCNT), etc.; carbon fibers such as graphite nanofibers (GNF), carbon nanofibers (CNF), activated carbon fibers (ACF), etc.; graphite such as natural graphite, artificial graphite, expandable graphite, etc.; and activated carbon, but is not limited thereto. Preferably, the porous carbon material may be carbon nanotubes.

In the sulfur-carbon composite according to the present disclosure, the sulfur may be disposed in at least one of the inside of the porous carbon material or the outer surface of the porous carbon material, and for example, may be present in an area of less than 100%, preferably 1 to 95%, and more preferably 40 to 96% of the inside of the porous carbon material and the outer surface of the porous carbon material. When the sulfur is present inside the porous carbon material and on the outer surface of the porous carbon material within the above-described range, maximum effect may be exhibited in terms of electron transport area and electrolyte wetting. Specifically, when the sulfur is thinly and uniformly loaded onto the above-described range of areas inside of the porous carbon material and on the outer surface of the porous carbon material, it may be possible to increase the electron transport contact area during charging and discharging. When the sulfur is located in the area corresponding to 100% of the inside of the porous carbon material and the outer surface of the porous carbon material, the porous carbon material is completely covered with the sulfur, resulting in poor electrolyte wetting and little or no contact, thereby failing to accept electrons and participate in electrochemical reaction.

The sulfur-carbon composite may, for example, include the sulfur in an amount of 65 wt% or more, specifically 65 to 90 wt%, 70 to 85 wt%, or 72 to 80 wt% based on 100 wt% of the sulfur-carbon composite. When the sulfur content is within the above-described range, it may have a beneficial effect on performance and capacity of the battery, but the present disclosure is not limited thereto.

The sulfur-carbon composite of the present disclosure may be produced by any method commonly used in the art without limitation. For example, the composite may be produced by simply mixing the sulfur with the porous carbon material and then heat-treating the mixture.

In an embodiment of the present disclosure, in addition to the above-described composition, the positive electrode active material may further include at least one additive selected from transition metal elements, Group IIIA elements, Group IVA elements, compounds of these elements with sulfur, and alloys of these elements with sulfur.

The transition metal elements may include Sc, Ti, V, Cr, Mn, Fe, Co, Ni, Cu, Zn, Y, Zr, Nb, Mo, Tc, Ru, Rh, Pd, Os, Ir, Pt, Au or Hg, the Group IIIA elements may include Al, Ga, In, Ti, etc., and the Group IVA elements may include Ge, Sn, Pb, etc.

The positive electrode for the lithium secondary battery of the present disclosure may include, for example, the positive electrode active material in an amount of 80 wt% or more, specifically 80 wt% to 100 wt%, and more specifically 85 wt% to 98 wt%, or 80 wt% to 95 wt% based on the total weight of the positive electrode active material layer. The lower limit of the amount of the positive electrode active material may be 70 wt% or more or 85 wt% or more based on the total 100 wt% of the positive electrode active material layer, and the upper limit may be 99 wt% or less or 90 wt% or less based on the total 100 wt% of the positive electrode active material layer. The amount of the positive electrode active material may be set by a combination of the lower limit and the upper limit. When the amount of the positive electrode active material is less than the above-described range, the relative quantity of the subsidiary materials such as the conductive material and the binder is high and the amount of the positive electrode active material is low, which makes it difficult to achieve the battery with high capacity and high energy density. On the contrary, when the amount of the sulfur-carbon composite exceeds the above-described range, the relative quantity of the conductive material or the binder as described below is low and the physical properties of the electrode decrease.

The conductive material acts as movement paths of electrons from the current collector to the positive electrode active material by electrically connecting the electrolyte to the positive electrode active material, and may include, without limitation, any material having conductive properties as the component of the electrode, which is physically different from the carbon contained in the sulfur-carbon composite.

For example, the conductive material may include carbon black such as Super-P, Denka black, acetylene black, Ketjen black, channel black, furnace black, lamp black, thermal black, carbon black, etc.; carbon derivatives such as carbon nanotubes, fullerene, etc.; conductive fibers such as carbon fibers, metal fibers, etc.; fluorocarbons; metal powders such as aluminum powder, nickel powder, etc.; or conductive polymers such as polyaniline, polythiophene, polyacetylene, polypyrrole, etc., used singly or in combination.

The amount of the conductive material may be 1 to 10 wt% based on the total weight of the positive electrode active material. When the amount of the conductive material is less than the above-described range, electron transfer between the positive electrode active material and the current collector reduces, resulting in lower voltage and capacity. On the contrary, when the amount of the conductive material exceeds the above-described range, the relative proportion of the positive electrode active material is low, and the total energy (amount of charges) of the battery may decrease. Therefore, it is preferable to determine an optimal amount within the above-described range.

The binder binds the positive electrode active material to the positive electrode current collector and interconnects the positive electrode active material to increase the bond strength, and may include any binder known in the art.

For example, the binder may include any one selected from the group consisting of a fluororesin-based binder including polyvinylidene fluoride (PVDF), a polyvinylidene fluoride-based polymer containing at least one vinylidene fluoride as a repeating unit, polytetrafluoroethylene (PTFE) or a mixture thereof; a rubber-based binder including styrene-butadiene rubber (SBR), acrylonitrile-butadiene rubber and styrene-isoprene rubber; an acrylic binder; a cellulose-based binder including carboxymethyl cellulose (CMC), starch, hydroxypropyl cellulose and regenerated cellulose; a polyalcohol-based binder; a polyolefin-based binder including polyethylene and polypropylene; a polyimide-based binder; a polyester-based binder; and a silane-based binder; and a mixture thereof or a copolymer thereof.

The amount of the binder may be 1 to 10 wt% based on the total weight of the positive electrode active material layer. When the amount of the binder is less than the above-described range, the physical properties of the positive electrode may decrease and the positive electrode active material and the conductive material may be desorbed. When the amount of the binder exceeds the above-described range, the relative proportion of the positive electrode active material and the conductive material in the positive electrode is low, resulting in low battery capacity. Therefore, it is preferable to determine an optimal amount within the above-described range.

In the present disclosure, a method for manufacturing the positive electrode for the lithium secondary battery is not particularly limited, and may include any method known to those skilled in the art or its variations.

By way of example, the positive electrode for the lithium secondary battery may be manufactured by preparing a positive electrode slurry composition comprising the above-described composition and coating the positive electrode slurry composition on at least one surface of the positive electrode current collector to form the positive electrode active material layer.

The positive electrode slurry composition comprises the positive electrode active material described above and may further comprise the binder, the conductive material and a solvent.

The solvent includes any solvent that facilitates the uniform dispersion of the positive electrode active material. The solvent may include a water-based solvent, most preferably water, and in this instance, water may be distilled water or deionized water. However, the present disclosure is not necessarily limited thereto and if necessary, lower alcohol that easily mixes with water may be used. The lower alcohol may include methanol, ethanol, propanol, isopropanol and butanol, and preferably, a mixture of lower alcohol and water may be used.

The solvent may be included at a sufficient level of concentration to make coating easy, and the specific amount may change depending on the coating method and device.

The positive electrode slurry composition may further comprise a material commonly used to improve functions in the corresponding technical field, if necessary. For example, the material may include a viscosity modifier, a glidant, a filler, etc.

A method for coating the positive electrode slurry composition is not particularly limited in the present disclosure, and for example, may include doctor blade, die casting, comma coating, screen printing, etc. In addition, after forming on a substrate, the positive electrode slurry may be coated on the positive electrode current collector by pressing or lamination.

After the coating, a drying process may be performed to remove the solvent. The drying process may be performed at suitable temperatures and times to remove the solvent, and the conditions may change depending on the type of the solvent and are not particularly limited in the present disclosure. By way of example, the drying method may include drying with warm air, hot air or low-humidity air, vacuum drying, drying by (far)infrared radiation or electron beam radiation, etc. The drying speed is usually adjusted to remove the solvent as quickly as possible within a speed range in which cracking does not occur in the positive electrode active material layer or the positive electrode active material layer is not peeled off from the positive electrode current collector due to stress concentration.

In addition, after the drying, the current collector may be pressed to increase the density of the positive electrode active material in the positive electrode. The pressing method may include mold pressing, roll pressing, etc.

The positive electrode manufactured by the above-described composition and manufacturing method, specifically the positive electrode active material layer, may have the porosity of 50 to 80 vol%, specifically 60 to 75 vol%. When the porosity of the positive electrode is less than 50 vol%, the filling level of the positive electrode slurry composition comprising the positive electrode active material, the conductive material and the binder is too high, thereby failing to maintain enough electrolyte to exhibit ionic conductivity and/or electrical conductivity in the positive electrode active material. As a result, the output characteristics or cycle characteristics of the battery may degrade, which induces severe overvoltage and reduction in discharge capacity of the battery. On the contrary, when the porosity of the positive electrode is too high over 80 vol%, it may result in poor physical and electrical connection with the current collector, low adhesion strength and no or little reaction, and the filling of the electrolyte at the high porosity may reduce the energy density of the battery. Accordingly, the porosity is appropriately adjusted within the above-described range.

### [Negative electrode]

The negative electrode may include a negative electrode current collector and a negative electrode active material layer on one or two surfaces of the negative electrode current collector. Alternatively, the negative electrode may be a lithium metal plate.

The negative electrode current collector is configured to support the negative electrode active material layer, as described in the positive electrode current collector.

The negative electrode active material layer may include a negative electrode active material, and may further include a conductive material, a binder, etc. In this instance, the conductive material and the binder follow the above description.

The negative electrode active material may include materials capable of reversibly intercalating or deintercalating lithium (Li⁺), materials capable of reacting with lithium ions to reversibly form lithium containing compounds, lithium metals or lithium alloys.

The materials capable of reversibly intercalating or deintercalating lithium ions (Li⁺) may include, for example, crystalline carbon, amorphous carbon or a mixture thereof. The materials capable of reacting with lithium ions (Li⁺) to reversibly form lithium containing compounds may include, for example, tin oxide, titanium nitrate or silicon. The lithium alloys may include, for example, alloys of lithium (Li) and metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn).

Preferably, the negative electrode active material may be a lithium metal, and specifically, may be in the form of a lithium metal foil or a lithium metal powder.

In an embodiment of the present disclosure, the negative electrode may be a lithium metal foil or a lithium alloy foil.

In an embodiment of the present disclosure, the negative electrode may have a small thickness to improve of the energy density of the lithium-sulfur battery, and for example, the thickness may be 20 µm to 120 µm, specifically 20 µm to 100 µm, 30 µm to 80 µm, 40 µm to 70 µm or 50 µm to 60 µm. The thickness of the negative electrode may be measured using Mitutoyo's thickness gauge, or may be determined through SEM images of the cross section of the negative electrode, and the measurement method is not particularly limited.

### [Separator]

The separator separates or insulates the positive electrode from the negative electrode and enables the transport of lithium ions between the positive electrode and the negative electrode. The separator may be made of a porous nonconductive or insulating material and is not limited to a particular type and may include any separator commonly used in lithium secondary batteries. The separator may be a stand-alone member such as a film, and may also be a coating layer added to the positive electrode and/or the negative electrode.

The separator may preferably have low resistance to the movement of electrolyte ions and high ability to absorb the electrolyte.

The separator may include a porous substrate, and the porous substrate may include any porous substrate commonly used in secondary batteries, and a porous polymer film may be used alone or in a stack. For example, a nonwoven fabric made of high-melting-point glass fibers, polyethylene terephthalate fibers, etc. or a polyolefin-based porous membrane may be used, but is not limited thereto.

The porous substrate is not limited to a particular material in the present disclosure, and may include any porous substrate commonly used in electrochemical devices. For example, the porous substrate may include at least one type of material selected from the group consisting of polyolefin such as polyethylene, polypropylene, etc., polyester such as polyethylene terephthalate, polybutylene terephthalate, etc., polyamide, polyacetal, polycarbonate, polyimide, polyether ether ketone, polyethersulfone, polyphenylene oxide, polyphenylene sulfide, polyethylene naphthalate, polytetrafluoroethylene, polyvinylidene fluoride, polyvinyl chloride, polyacrylonitrile, cellulose, nylon, poly(p-phenylene benzobisoxazole) and polyarylate.

The thickness of the porous substrate may be 1 to 100 µm, and preferably 5 to 50 µm, but is not limited thereto. Although the thickness of the porous substrate is not limited to the above-described range, when the thickness is too small below the above-described lower limit, the mechanical properties may decrease and the separator may be easily damaged while the battery is in use.

The porous substrate may have an average pore diameter of 0.001 to 50 µm and a porosity 10 to 95 vol%, but is not limited thereto.

The lithium-sulfur battery according to the present disclosure may allow the commonly used winding process as well as lamination or stacking and folding processes of the separator and the electrode.

The lithium-sulfur battery is not limited to a particular shape and may come in different shapes, for example, cylindrical, stack-type, coin-type, pouch-type, etc.

Hereinafter, the present disclosure will be described in more detail through embodiments. However, the following embodiments are provided by way of illustration, and the scope of the present disclosure is not limited thereto.

### [Manufacture of lithium-sulfur battery]

### Example 1

### Preparation of electrolyte for lithium-sulfur battery

0.5 M of lithium bis(fluorosulfonyl)imide (LiFSI), 3 wt% of lithium nitrate (LiNO₃, molar mass 69 g/mol) and 10 wt% of 1,3,5-trioxane (TOX, molar mass 90.08 g/mol) were added to a mixture of 2-methylfuran (2MeF) and 1,2-dimethoxyethane (DME) (2:8 v/v) and stirred at room temperature (23°C) for 12 hours to prepare an electrolyte.

### Preparation of electrode

A sulfur-carbon composite (S₈:CNT=75:25 (weight ratio)) as a positive electrode active material and polyacrylic acid (PAA) as a binder were mixed at a weight ratio of 95:5 in distilled water as a solvent to prepare a positive electrode slurry.

The positive electrode slurry composition was coated on two surfaces of a 12 µm thick aluminum current collector, dried at 80°C and rolled using a roll press machine to make a positive electrode. In this instance, the loading amount of the positive electrode active material was 2.9 mAh/cm².

For a negative electrode, a 50 µm thick lithium metal foil was prepared.

### Manufacture of lithium-sulfur battery

The positive electrode and the negative electrode as prepared above were placed with a polyethylene separator having a thickness of 16µm and a porosity of 68 vol% interposed between and stacked together to assemble a pouch cell, and 1g of the prepared electrolyte was injected into the pouch cell, followed by sealing to fabricate a pouch-type lithium-sulfur battery.

### Example 2

A lithium-sulfur battery was manufactured by the same method as Example 1 except that 20 wt% of 1,3,5-trioxane (TOX) was added.

### Example 3

A lithium-sulfur battery was manufactured by the same method as Example 1 except that 30 wt% of 1,3,5-trioxane (TOX) was added.

### Example 4

A lithium-sulfur battery was manufactured by the same method as Example 1 except that 40 wt% of 1,3,5-trioxane (TOX) was added.

### Example 5

### Preparation of electrolyte for lithium-sulfur battery

0.5 M of lithium bis(fluorosulfonyl)imide (LiFSI), 3 wt% of lithium nitrate (LiNO₃, molar mass 69 g/mol) and 10 wt% of 1,3,5-trioxane (TOX, molar mass 90.08 g/mol) were added to a mixture of 2-methylfuran (2MeF) and 1,2-dimethoxyethane (DME) (2:8 v/v) and stirred at room temperature (23°C) for 12 hours to prepare an electrolyte.

### Preparation of electrode

A sulfur-carbon composite (S₈:CNT=75:25 (weight ratio)) as a positive electrode active material and a mixture of carboxymethylcellulose (CMC): polyacrylic acid (PAA):styrene butyl rubber (SBR)(0.5:1.5:2.0 weight ratio) as a binder were mixed at a weight ratio of 96:4 in distilled water as a solvent to prepare a positive electrode slurry.

The positive electrode slurry composition was coated on two surfaces of a 12 µm thick aluminum current collector, dried at 80°C and rolled using a roll press machine to make a positive electrode. In this instance, the loading amount of the positive electrode active material was 3.0 mAh/cm².

For a negative electrode, a 50 µm thick lithium metal foil was prepared.

### Manufacture of lithium-sulfur battery

The positive electrode and the negative electrode as prepared above were placed with a polyethylene separator having a thickness of 16 µm and a porosity of 68 vol% interposed between and stacked together to assemble a pouch cell, and 1g of the prepared electrolyte was injected into the pouch cell, followed by sealing to fabricate a pouch-type lithium-sulfur battery.

### Example 6

A lithium-sulfur battery was manufactured by the same method as Example 5 except that 0.5 M of lithium bis(trifluoromethanesulfonyl)imide (LiTFSI) was added instead of 0.5 M of lithium bis(fluorosulfonyl)imide (LiFSI) as a lithium salt.

### Example 7

A lithium-sulfur battery was manufactured by the same method as Example 6 except for DOL:DME (2:8 v/v) using 1,3-dioxolane (DOL) instead of 2-MeF as a nonaqueous solvent.

### Comparative Example 1

A lithium-sulfur battery was manufactured by the same method as Example 1 except that 1,3,5-trioxane (TOX) was not added.

### Comparative Example 2

A lithium-sulfur battery was manufactured by the same method as Example 1 except that for a nonaqueous solvent, 1,3-dioxolane and 1,2-dimethoxyethane (1:1 v/v) were used instead of 2-MeF:DME (2:8 v/v), and 1,3,5-trioxane (TOX) was not added.

### Comparative Example 3

A lithium-sulfur battery was manufactured by the same method as Example 1 except that for a nonaqueous solvent, 1,3-dioxolane and monofluoroethylenecarbonate were used, and 1,3,5-trioxane was added such that a volume ratio of 1,3,5-trioxane:1,3-dioxolane:monofluoroethylenecarbonate was 10:80:10, and 0.5M of LiFSI and 3 wt% of LiNO₃ were added.

### Experimental Example 1. Battery performance evaluation with/without TOX and its results

For each of the batteries of Example 1 and Comparative Example 1, performance evaluation was performed by the following method.

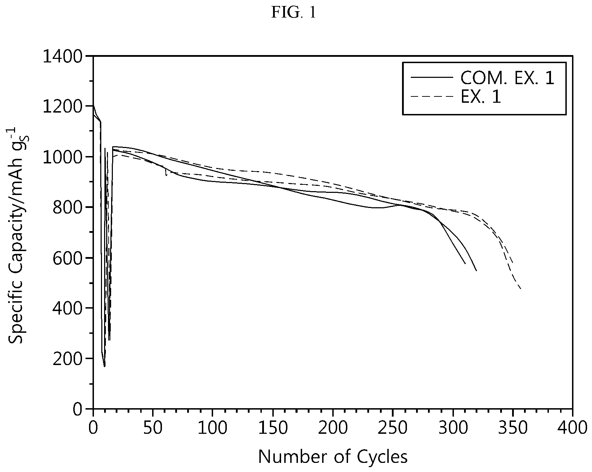

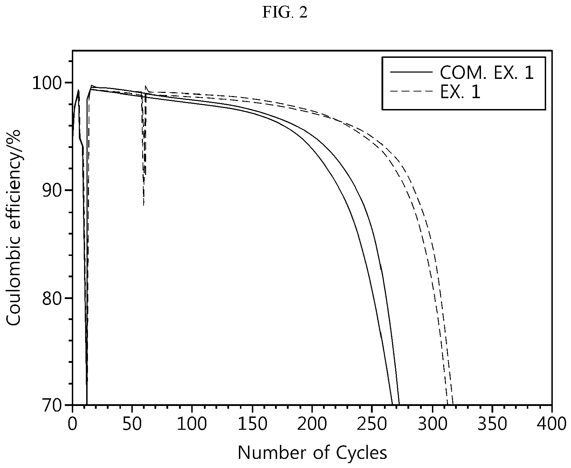

Battery performance was evaluated by charging and discharging in 1.8 V to 2.5 V cut-off condition at 25°C for 6 cycles for activation, each cycle being a 0.5 C charge/0.5 C discharge cycle, followed by repeated 0.3 C charge/1 C discharge CC mode cycles, and FIGs. 1 and 2 show the results.

Referring to FIGs. 1 and 2, it was confirmed that when TOX was included in the electrolyte for the lithium-sulfur battery, compared to Comparative Example 1 in which TOX was not included, capacity fading over the repeated charge and discharge cycles was notably reduced.

### Experimental Example 2. Battery performance evaluation as a function of TOX content and its results

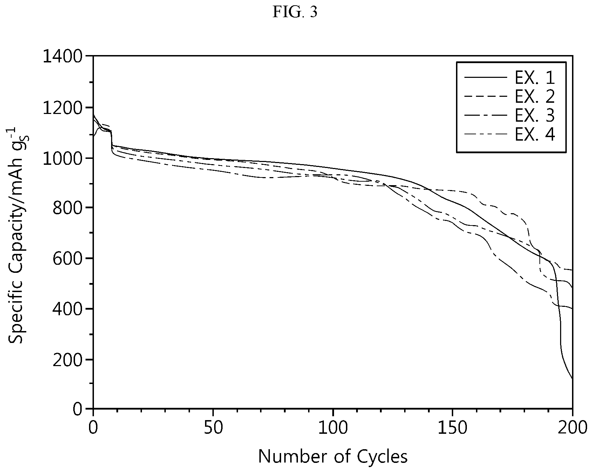

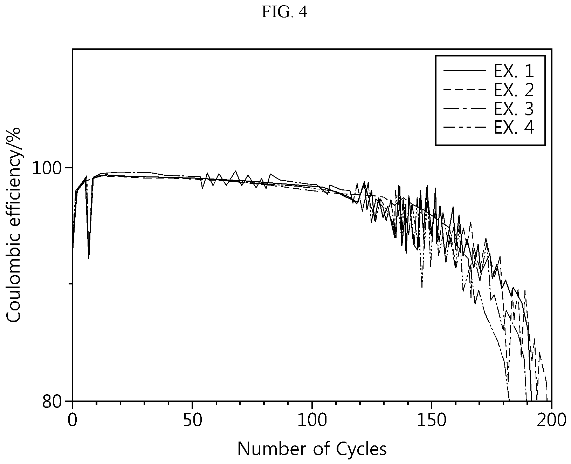

For each of the batteries of Example 1 to Example 4, performance evaluation was performed by the same method as Experimental Example 1, and FIGs. 3 and 4 show the results.

Referring to FIGs. 3 and 4, the life characteristics of all the batteries were improved by the addition of TOX, and in particular, life improvement performance was as follows: Example 4 (40 wt% added)<Example 3 (30 wt% added)<Example 1(10 wt% added)<Example 2 (20 wt% added).

### Experimental Example 3. Battery performance evaluation as a function of electrolyte composition and its results

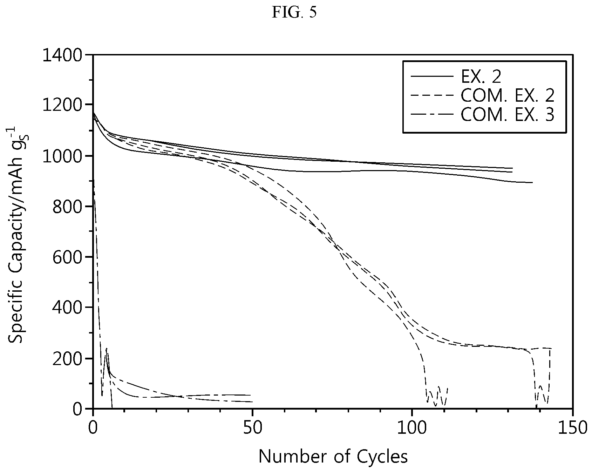

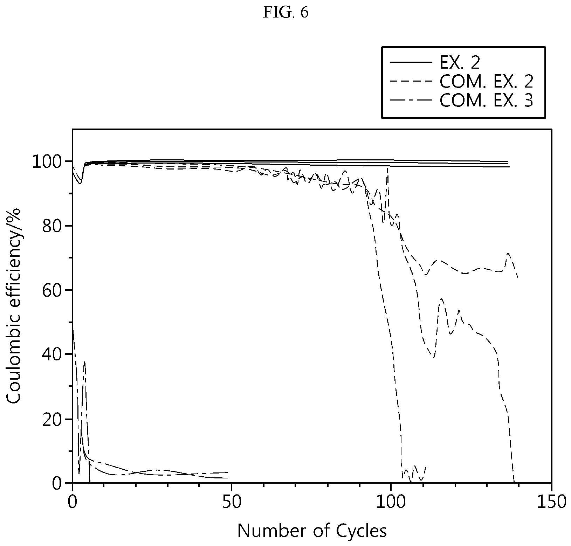

For each of the batteries of Example 2, Comparative Example 2 and Comparative Example 3, performance evaluation was performed by the same method as Experimental Example 1, and FIGs. 5 and 6 show the results.

Referring to FIGs. 5 and 6, it was confirmed that the battery of Example 2 with an addition of TOX showed much higher capacity retention performance over the repeated charge and discharge cycles than Comparative Example 2 in which TOX was not added and the composition of 1,3-dioxolane and 1,2-dimethoxyethane (1/1 v/v) was used as the nonaqueous solvent. In particular, in the case of Comparative Example 3, because TOX was added, but as the composition of the nonaqueous solvent, the composition of the 1,3-dioxolane and the carbonate-based solvent was included, not the combination of cyclic ether and linear ether, the battery performance was found to be very low. Presumably, battery performance degradation occurred due to side reaction between the carbonate-based solvent and the polysulfide.

### Experimental Example 4. Battery performance evaluation as a function of electrolyte composition and its results

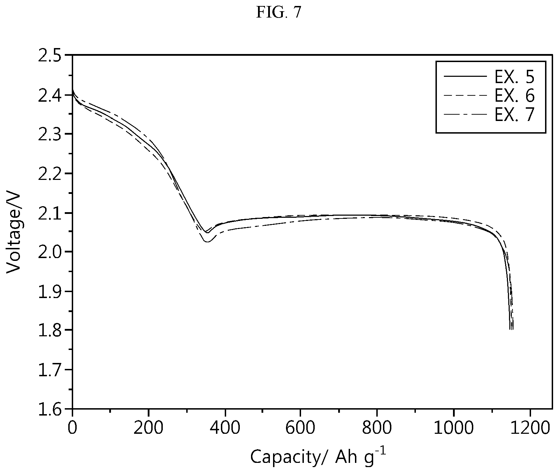

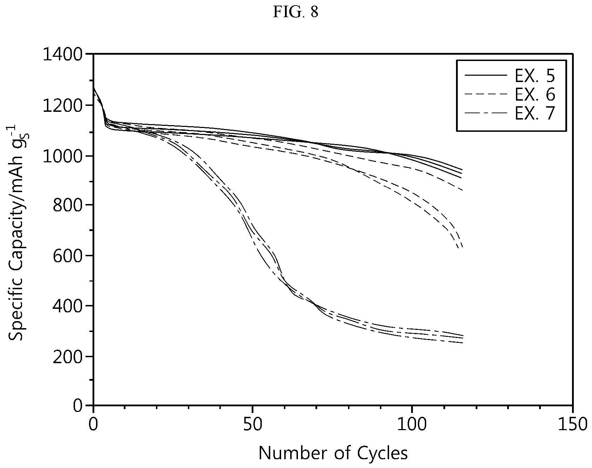

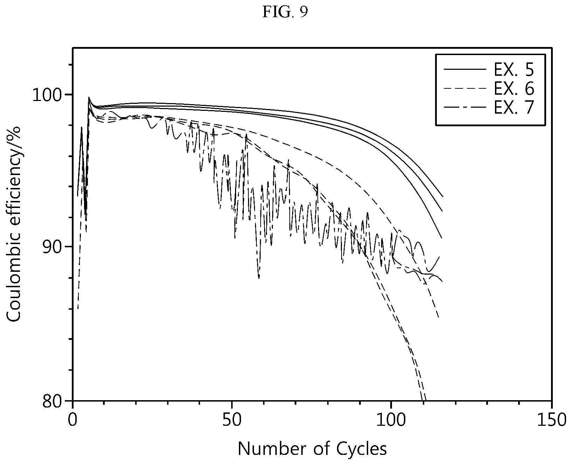

For each of the batteries of Example 5, Example 6 and Example 7, 0.1C discharge and 0.1C charge was repeatedly performed two times in a CC mode in a range between 1.8 V and 2.5 V at 25°C, followed by 0.1C discharge to activate the battery. Subsequently, the battery underwent repeated 0.2C charge and 0.3C discharge cycles in a range between 1.8 V and 2.5 V in a CC mode at 25°C to evaluate battery performance. In this instance, the charge and discharge was performed under the pressure of 7 atm applied to the battery using a pressing jig. FIGs. 7, 8 and 9 show the evaluation results.

Referring to FIGs. 7, 8 and 9, a significant change was not found in the discharge protocol of Example 5, Example 6 and Example 7 with the addition of TOX in the electrolyte, but Example 5 showed much longer battery life than Example 6 in which the lithium salt was replaced with LiTFSI and Example 7 in which 2-MeF was replaced with DOL as the cyclic ether in the nonaqueous solvent.

Accordingly, it was confirmed that when TOX was used in the electrolyte, it produced a high synergistic effect with the LiFSI as the lithium salt and the mixed solvent of 2-MeF and DME as the nonaqueous solvent.

## Claims

1. An electrolyte for a lithium-sulfur battery, comprising:
a nonaqueous solvent, a lithium salt, nitrate and trioxane,
wherein the nonaqueous solvent includes an ether-based solvent, and
wherein the ether-based solvent includes a cyclic ether and an acyclic ether.

2. The electrolyte for the lithium-sulfur battery according to claim 1, wherein the cyclic ether is included in an amount of 30 vol% or less based on a total volume of the nonaqueous solvent.

3. The electrolyte for the lithium-sulfur battery according to claim 1, wherein the cyclic ether is included in an amount of 20 vol% or less based on a total volume of the nonaqueous solvent.

4. The electrolyte for the lithium-sulfur battery according to claim 1, wherein the cyclic ether is included in an amount of 20 vol% or less based on a total volume of the nonaqueous solvent, and
wherein the acyclic ether is included in an amount of 80 vol% or more based on the total volume of the nonaqueous solvent.

5. The electrolyte for the lithium-sulfur battery according to claim 1, wherein the nonaqueous solvent does not include a carbonate-based solvent.

6. The electrolyte for the lithium-sulfur battery according to claim 1, wherein the cyclic ether includes 2-methylfuran, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, isosorbide dimethyl ether or a mixture thereof.

7. The electrolyte for the lithium-sulfur battery according to claim 1, wherein the acyclic ether includes dimethyl ether, diethyl ether, dipropyl ether, dibutyl ether, diisobutyl ether, ethylmethyl ether, ethylpropyl ether, ethyltertbutyl ether, dimethoxymethane, trimethoxymethane, dimethoxyethane, diethoxyethane, dimethoxypropane, diethyleneglycol dimethylether, diethyleneglycol diethylether, triethyleneglycol dimethylether, tetraethyleneglycol dimethylether, ethyleneglycol divinylether, diethyleneglycol divinylether, triethyleneglycol divinylether, dipropylene glycol dimethyl ether, butylene glycol ether, diethyleneglycol ethylmethylether, diethyleneglycol isopropylmethylether, diethyleneglycol butylmethylether, diethyleneglycol tertbutylethylether, ethyleneglycol ethylmethylether or a mixture thereof.

8. The electrolyte for the lithium-sulfur battery according to claim 1, wherein the trioxane is included in an amount of 5 wt% to 45 wt% based on a total weight of the electrolyte for the lithium-sulfur battery.

9. The electrolyte for the lithium-sulfur battery according to claim 1, wherein the trioxane is included in an amount of 10 wt% to 20 wt% based on a total weight of the electrolyte for the lithium-sulfur battery.

10. The electrolyte for the lithium-sulfur battery according to claim 1, wherein a weight ratio of the trioxane to the nitrate is 2 to 15.

11. A lithium-sulfur battery comprising:
a positive electrode, a negative electrode, a separator between the positive electrode and the negative electrode and an electrolyte,
wherein the electrolyte is defined in any one of claims 1 to 10, and
wherein the positive electrode includes a sulfur-containing compound as a positive electrode active material.

12. The lithium-sulfur battery according to claim 11, wherein the sulfur-containing compound includes an inorganic sulfur (S₈), Li₂Sn (n≥1), a disulfide compound, an organic sulfur compound, a carbon-sulfur polymer ((C₂Sₓ)ₙ, x is an integer of 2.5 to 50, n≥2) or a mixture thereof.

13. The lithium-sulfur battery according to claim 11, wherein the negative electrode includes a lithium metal, a lithium alloy or a mixture thereof as a negative electrode active material.

14. The lithium-sulfur battery according to claim 11, wherein the lithium-sulfur battery is a coin-type battery or a pouch-type battery.
